# FASCICULE DE BREVET EUROPEEN

(11) **EP 0 825 137 B1**
(45) Date de publication et mention de la délivrance du brevet: **17.12.2003**
(21) Numéro de dépôt: 97870124.1
(22) Date de dépôt: 21.08.1997
(51) Int. Cl.: B65G 21/20

(54) **Installation pour la formation d'une rive le long d'une bande convoyeuse**
Vorrichtung zum Bilden eines Förderbandrandes
Device for manufacturing an upstanding edge along a conveyor belt

(30) Priorité: 22.08.1996 BE 9600715
(43) Date de publication de la demande: 25.02.1998
(73) Titulaire: TECHNIC GUM S.A., 7060 Soignies (BE)
(72) Inventeur: Davidts, E, 7060 Soignies (BE)
(74) Mandataire: Pieraerts, Jacques

(56) Documents cités:
- EP-A- 0 536 847
- WO-A-91/13821
- GB-A- 2 208 838
- US-A- 4 874 082

## Description

La présente invention concerne une installation pour la formation d'une rive le long d'une bande convoyeuse conforme au préambule de la revendication 1 annexée (voir US-A-4 874 082).

La fixation d'une bavette en élastomère ou une matière élastique analogue le long d'une bande transporteuse, par exemple au droit d'une trémie d'alimentation, pose un certain nombre de problèmes qui sont liés à la nécessité d'adapter continuellement et localement les bavettes au profil de la bande transporteuse.

Il est en effet impératif de réaliser sur toute la longueur des bavettes une étanchéité parfaite avec la bande transporteuse et ceci en tenant compte d'une part de l'usure progressive de la partie de la bavette en contact avec la bande transporteuse et, d'autre part, de la flexibilité de la bande convoyeuse qui tend à s'affaisser légèrement entre deux rouleaux de support.

Il a déjà été proposé de constituer une bavette à partir de bavettes modulaires, ce qui ne résout pas encore le problème de l'étanchéité dans les conditions énoncées ci-dessus.

L'invention a pour but de réaliser une installation qui offre une réponse aux questions exposées ci-dessus et cela en améliorant considérablement les conditions dans lesquelles l'installation peut être continuellement adaptée aux exigences de travail.

Pour réaliser cet objectif conformément à l'invention, l'installation selon l'invention, qui comprend des bavettes qui peuvent être déplacées individuellement par rapport à un bâti de l'installation comportant une bande transporteuse et en direction de celle-ci et qui comportent une série de cannelures parallèles qui s'étendent transversalement par rapport au sens dans lequel les bavettes peuvent être déplacées, et des fixe-bavette qui retiennent les bavettes et qui comportent un moyen de blocage pour les bavettes grâce à un élément qui prend appui dans une cannelure leur appartenant , est caractérisée en ce que les cannelures de chaque bavette sont disposées à l'intérieur d'une gorge ménagée dans une surface de la bavette, en ce que le moyen de blocage de chaque bavette est constitué par une plaquette de section rectangulaire qui est guidée dans ladite gorge et dont l'une des extrémités est profilée en biseau pour prendre appui dans une cannelure de la bavette et en ce que chaque bavette présente une fente longitudinale (18) pour permettre le passage d'un tenon fileté destiné à la fixation à l'aide d'un écrou de la plaque rectangulaire par rapport à la bavette.

D'autres formes de réalisation de l'installation suivant l'invention sont indiquées dans les revendications annexées.

D'autres détails et avantages de l'invention ressortiront de la description qui sera donnée d'une installation pour la formation d'une rive le long d'une bande convoyeuse, selon l'invention. Cette description n'est donnée qu'à titre d'exemple et ne limite pas l'invention. Les notations de référence se réfèrent aux figures ci-annexées.
La figure 1 est une vue en élévation d'une bavette et d'un fixe-bavette utilisés dans le dispositif selon l'invention.
La figure 2 est une vue en coupe selon la ligne VII-VII de la figure 1.
La figure 3 est une vue en plan de la même bavette.

L'installation à laquelle appartiennent les fixe-bavette et les bavettes elles-mêmes représentées aux figures ci-jointes est généralement constituée d'un bâti dont une partie s'étend longitudinalement et transversalement par rapport à une bande transporteuse. De ce bâti, représenté schématiquement aux figures, sont solidarisées des bavettes qui sont destinées à assurer l'étanchéité dans le sens longitudinal aussi bien que dans le sens transversal d'un trémie d'alimentation disposée au-dessus d'une bande transporteuse.

Il a depuis longtemps été proposé de faire usage de bavettes modulées qui peuvent être installées indépendamment l'une de l'autre à la hauteur voulue par rapport à la bande transporteuse.

L'installation qui sera décrite ci-après résout avec des moyens techniques simples et fiables les problèmes liés à une installation rapide et correcte de chacune des bavettes dans leur position idéale de travail.

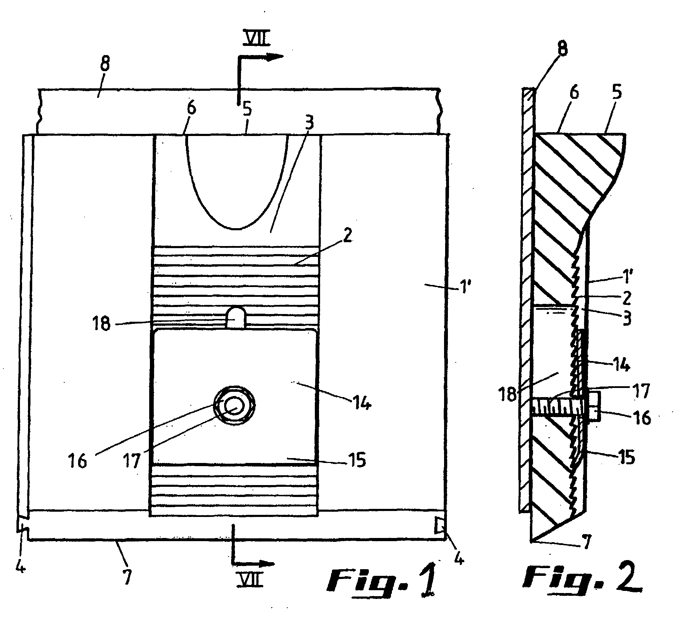

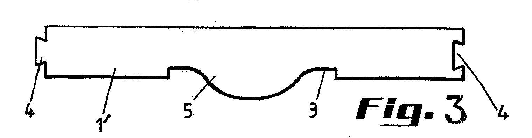

A cet effet les bavettes qui sont du type selon les figures 1 - 3 sont d'une conception qui permet leur ajustement rapide et leur positionnement durable en cours d'utilisation.

Les bavettes 1' (figures 1 - 3), qui sont réalisées en caoutchouc, présentent en leur milieu une série de cannelures 2 qui apparaissent à l'intérieur d'une gorge 3. Ces cannelures s'étendent dans le sens transversal de la bavette. Latéralement les bavettes présentent un relief en forme de queue d'aronde 4 pour permettre de solidariser, par glissement, chaque bavette de deux bavettes voisines. Ceci permet d'obtenir une paroi continue.

Comme chaque bavette doit être installée à une hauteur déterminée par rapport à la bande transporteuse il est prévu, selon l'invention, un renflement 5 qui se situe à la partie supérieure 6 de la bavette, pour offrir une surface de frappe appropriée pour un marteau ou un maillet. Ce renflement sera avantageusement constitué d'un caoutchouc plus dur, se situant par exemple entre 70° et 80° shore. Ceci évite que ce bord supérieur de la bavette ne soit endommagé par les coups de marteau nécessaires à l'ajustement de la bavette par rapport à la bande transporteuse.

A sa partie inférieure 7, la bavette présente un profil en forme de biseau.

Les expressions "supérieure" et "inférieure" utilisées ici se conçoivent dans la position d'utilisation des bavettes.

Pour ajuster rapidement et correctement les bavettes par rapport à une paroi métallique 8 du bâti formant une rive, il est fait usage dans l'installation selon l'invention de fixe-bavette d'un type nouveau et original.

Le fixe-bavette est représenté en particulier aux figures 1 et 2. Le fixe-bavette est ici constitué par une plaquette rectangulaire 14 dont l'extrémité inférieure 15 est légèrement recourbée pour mieux s'insérer dans les cannelures 2 de la bavette 1'. La plaquette 14 peut être appliquée plus ou moins fortement en contact avec la bavette 1' en vissant plus ou moins l'écrou 16 sur le tenon fileté 17 qui est soudé sur la plaque 8 du bâti et traverse une rainure longitudinale 18 ménagée dans le plan de symétrie de la bavette 1'.

Les moyens qui permettent l'installation à une hauteur voulue de la bavette 1' sont non seulement extrêmement simples et fiables tout en faisant appel à des moyens techniques de conception originale.

## Revendications

1. Installation pour la formation d'une rive le long d'une bande convoyeuse, comprenant des bavettes (1') qui peuvent être déplacées individuellement par rapport à un bâti de l'installation comportant une bande transporteuse et en direction de celle-ci et qui comportent une série de cannelures parallèles (2) qui s'étendent transversalement par rapport au sens dans lequel les bavettes peuvent être déplacées, et des fixe-bavette qui retiennent les bavettes et qui comportent un moyen de blocage (14) pour les bavettes grâce à un élément qui prend appui dans une cannelure (2) leur appartenant, **caractérisée en ce que** les cannelures (2) de chaque bavette sont disposées à l'intérieur d'une gorge (3) ménagée dans une surface de la bavette (1'), **en ce que** le moyen de blocage de chaque bavette est constitué par une plaquette de section rectangulaire (14) qui est guidée dans ladite gorge et dont l'une des extrémités est profilée en biseau pour prendre appui dans une cannelure (2) de la bavette (1') et **en ce que** chaque bavette (1') présente une fente longitudinale (18) pour permettre le passage d'un tenon fileté (17) destiné à la fixation à l'aide d'un écrou de la plaque rectangulaire par rapport à la bavette (1')

2. Installation selon la revendication 1, **caractérisé en ce que** les bavettes (1') comportent à leur partie considérée en utilisation comme la partie supérieure, un renflement (5) offrant une surface de frappe pour un marteau ou un maillet.

3. Installation selon la revendication 2, **caractérisée en ce que** le renflement précité est constitué en un caoutchouc de dureté shore située entre 70° et 80°.

4. Installation selon l'une des revendications 2 et 3, **caractérisée en ce que** les bavettes sont réalisées en caoutchouc et **en ce que** ledit renflement est constitué d'un caoutchouc plus dur.

## Claims

1. Installation to form an edge along a conveyor belt, comprising flaps (1') which can be displaced in relation to a frame of the installation comprising a conveyor belt and in the direction of it, and which include a series of parallel grooves (2) which extend transversely in relation to the direction in which the flaps can be displaced, and flap fixers which hold the flaps and comprise a means of blocking (14) for the flaps because of an element which is supported in a groove (2) which belongs to them, **characterized in that** the grooves (2) of each flap are arranged within a recess (3) which is arranged in one surface of the flap (1'), **in that** the means of blocking of each flap consists of a small plate of rectangular section (14) which is guided in the said recess and of which one of the extremities has a bevelled profile to be supported in a groove (2) of the flap (1'), and **in that** each flap (1') has a longitudinal slot (18), to allow the passage of a threaded lug (17) which is intended to be fixed in relation to the flap (1') using a nut of the rectangular plate.

2. Installation according to Claim 1, **characterized in that** the flaps (1') include, at their part which is considered as the upper part when they are in use, a bulge (5) which offers a striking surface for a hammer or mallet.

3. Installation according to Claim 2, **characterized in that** the above-mentioned bulge consists of rubber of Shore hardness between 70° and 80°.

4. Installation according to one of Claims 2 and 3, **characterized in that** the flaps are implemented in rubber, and that the said bulge consists of harder rubber.

## Patentansprüche

1. Einrichtung zum Ausbilden einer Kantenfläche entlang eines Förderbands, mit Einführapparaten (1'), die einzeln bezüglich eines Gestells der Einrichtung verschoben werden können, das ein Transportband aufweist, und zwar in Richtung dieses Transportbands, und die eine Reihe von parallel verlaufenden Rillen (2) aufweisen, die sich quer zu der Richtung erstrecken, in welcher die Einführapparate verschoben werden können, und Halterungen für die Einführapparate, die die Einführapparate lagern und die ein Arretiermittel (14) für die Einführapparate dank eines Elements aufweisen, das in einer zu ihnen gehörenden Rille (2) anstößt, **dadurch gekennzeichnet, dass** die Rillen (2) jedes Einführapparats im Inneren einer in einer Oberfläche des Einführapparats (1') ausgebildeten Kehle (3) angeordnet sind, dass das Arretiermittel jedes Einführapparats durch eine Platte mit rechteckigem Querschnitt (14) gebildet ist, die in dieser Kehle geführt ist und deren eines Ende facettiert oder angeschrägt ist, um in einer Rille (2) des Einführapparats (1') anzustoßen, und dass jeder Einführapparat (1') einen längs verlaufenden Schlitz (18) aufweist, um den Durchtritt eines Gewindezapfens (17) zu ermöglichen, der zum Befestigen der rechteckigen Platte bezüglich des Einführapparats (1') mit Hilfe einer Mutter bestimmt ist.

2. Einrichtung nach Anspruch 1, **dadurch gekennzeichnet, dass** die Einführapparate (1') in ihrem Bereich, der während des Gebrauchs als oberer Bereich angesehen wird, eine Verstärkung (5) aufweisen, die eine Schlagfläche für einen Hammer oder einen Klöpfel bietet.

3. Einrichtung nach Anspruch 2, **dadurch gekennzeichnet, dass** diese Verstärkung aus einem Gummi mit einer Shore-Härte zwischen 70° und 80° gebildet ist.

4. Einrichtung nach einem der Ansprüche 2 und 3, **dadurch gekennzeichnet, dass** die Einführapparate aus Gummi gemacht sind und dass die Verstärkung aus einem härteren Gummi gemacht ist.
